(19) Europäisches Patentamt
European Patent Office
Office européen des brevets

(11) **EP 3 076 144 B1**

(12) **EUROPEAN PATENT SPECIFICATION**

(45) Date of publication and mention
of the grant of the patent:
**05.06.2019 Bulletin 2019/23**

(51) Int Cl.:
*G01L 1/10* *(2006.01)*

(21) Application number: **16159530.1**

(22) Date of filing: **09.03.2016**

(54) **DEVICE FOR MEASURING THE RESONANCE FREQUENCY OF STRING TENSOMETRIC SENSORS WITH TWO-WIRE CONNECTION AND AUTOMATIC SET-UP**

GERÄT FÜR DIE MESSUNG DER RESONANZFREQUENZ DER SAITENDEHNUNGSMESSSTREIFEN MIT ZWEILEITERANSCHLUSS UND VOLLAUTOMATISCHER EINSTELLUNG

DISPOSITIF POUR MESURER UNE FRÉQUENCE DE RÉSONANCE DES CAPTEURS, CORDE TENSIOMÉTRIQUES AVEC UNE CONNEXION DE DEUX DÉTECTEURS ET UN RÉGLAGE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2015 CZ 20150223**

(43) Date of publication of application:
**05.10.2016 Bulletin 2016/40**

(73) Proprietor: **Ceské vysoké ucení technické v Praze**
**16627 Praha 6 (CZ)**

(72) Inventors:
• **HOSPODKA, Jirí**
**27341 Brandýsek (CZ)**

• **KOFRON, Martin**
**15200 Praha 5 (CZ)**

(74) Representative: **Kratochvil, Vaclav**
**Patent and Trademark Office**
**P.O. Box 26**
**295 01 Mnichovo Hradiste (CZ)**

(56) References cited:
• **JIRI HOSPODKA ET AL:** "New Method for Measuring of Natural Frequency of Tensometrical String Sensors", APPLIED ELECTRONICS, 2006. AE 2006. INTERNATIONAL CONFERENCE ON, IEEE, PI, 7 September 2006 (2006-09-07), pages 59-62, XP031161092, ISBN: 978-80-7043-442-0

## Description

Background of the Invention

Presented solution deals with a device for measuring the frequency of natural self-oscillations of tensometric sensors with a two-wire connection, and it describes an improved principle of a device with an automatic set-up of parameters for excitation and sensing the oscillations of string tensometric sensors.

Description of Prior Art

The function of the current exciters of single-coil sensors is based on the known principle when the string oscillations are excited by a pulse in an excitation coil, and subsequently the voltage generated in the coil by tail oscillations is measured. Various modifications exist here. For instance, instead of a single pulse, a burst of pulses may be used to achieve good excitation of the string. Wherever the burst pulse excitation was used in some types of exciters, such systems allowed only minimum options to modify their parameters. Most commercially used exciters are always designed for a narrow scope of sensors produced by a dedicated manufacturer and they cannot be used for all types of sensors or it is impossible to achieve optimal string excitation. The exact circuitry of dedicated manufacturers' exciters is mostly unavailable, but we may state that in most cases they use only this simple principle implemented as mentioned above.

The principle described in CZ patent Nos. 298425 and 300136 is based on the above-mentioned pulse-driven string excitation, while the induced signal is amplified by a differential amplifier with a fixed gain, and an active RC band-pass filter and a tunable narrow-band amplifying SC filter. This SC filter is made using a concept of switched capacitors, and it is tuned by the frequency of a phase-locked loop, which is tuned exactly to a multiple of the string resonance frequency in the synchronized state. The proper function of the device requires a control block, which both controls the mentioned blocks, and also it ensures the transition to synchronized state after the device is turned on or the sensor is connected.

Transition to the synchronized state is only possible when a phase-locked loop oscillator is tuned to the required frequency in such a way that the tunable narrow-band amplifying SC filter is tuned exactly to the resonance frequency of the sensor's string. As mentioned, this is provided by the control block. The phase-locked loop oscillator is tuned by means of s slow-tuning generator, while the sensor is excited by pulses from the control block. Simultaneously, the value of voltage induced after passing through the filters is monitored. If this voltage reaches the required level, it means that the tunable narrow-band amplifying SC filter, or the phase-locked loop oscillator respectively, is tuned properly and the circuit is switched to the synchronized state. The phase-locked loop oscillator starts to be controlled by the phase detector output, which compares both the frequency of the signal induced by the string and also the phase-locked loop oscillator frequency divided by the relevant number. Dividing ratio of the frequency divider is equal to the ratio of the tuning frequency and pass-band middle frequency of the tunable narrow-band amplifying SC filter. Upon transition to the synchronized state the phase-locked loop closes and it is controlled directly by the frequency of the amplified signal from the string. Excitation pulses are then derived from the signal of the phase-locked loop oscillator by means of the frequency divider and controlled counter. The excitation circuit is activated using a comparator depending on the magnitude of the induced voltage amplified in the cascade of filters. When this voltage drops below a defined limit, it means when the sensor string already oscillates with low amplitude, the comparator activates the counter, while the counter's pulses control the sensor exciter, thus re-exciting the string.

The described principle is usable for excitation of the majority of sensor types on the market as it adapts to their characteristics, such as the string resonance frequency and the oscillations attenuation decrement. It, however, has also some setbacks. These include a constant level of the string excitation and a fixed gain of amplifiers and filters in the signal path. As a result, it cannot adapt to the varied level of electromechanical coupling between the string and the electromagnetic system of the sensor. Mentioned parameters are selected as a compromise to allow reaching good excitation of the vast majority of sensors. Some types of sensors, however, may get overexcited and the signal passing through the filters saturated, which results in a greater error of the frequency measurement. On the contrary, with some sensors, the excitation may be insufficient resulting in low and noisy signal at the end of the signal path, which may lead to missing the phase-locked loop sync state and failure of the whole measurement. Another setback of the mentioned system is also slow system response, which is given by the speed of slow-running generator during the stage of searching the string resonance frequency. These setbacks are removed by the modification of the device described below.

Summary of the Invention

Disadvantages mentioned above are removed by a device for continuous measuring of string tensometric sensors with a two-wire connection and an automatic set-up according to the presented solution. This device is based on the CZ patents Nos. 298425 and 300136 and its part common with them is formed by an exciter, to which the sensor itself is connected and which is further connected via a block of protections to an input differential amplifier. The output of the differential amplifier is via an amplifying active RC band-pass filter with a fixed pass-band connected to the input of a tunable narrow-band amplifying SC filter, the output of which is via a low-pass filter and a first AC coupled amplifier connected to a comparator.

The principle of the new solution is that the activity of the whole device is controlled by a microprocessor, while to its first input is connected a signal FREQ_IN from the output of the comparator. To the second input of the processor is connected the output of an A/D converter, while to its first input is connected by a signal LEVEL_IN the output of the first AC coupled amplifier and to the second input of the A/D converter is connected by a signal FFT_IN the output of a second AC coupled amplifier, the input of which is connected to the output of the amplifying active RC band-pass filter with a fixed passband. The output of a signal OVERCURRENT of an exciter current protection is then connected to the third input of the processor. The processor is further connected with the inputs of the exciter, it means by its first control output with the input of a signal OVERCURRENT_RESET, by the second control output with the input of a signal EXCT_POS and by the third control output with the input of a signal EXCT_NEG. By its fourth control output the processor is connected to the block of protections, by the fifth control output, it is connected with the input of a signal G_SET for setting the gain of the input differential amplifier, which in this case is realized as a differential amplifier with variable gain, by the sixth control output with the input of a clock signal f_clk of the amplifying SC filter, by the seventh control output with the input of a signal COMP_ENABLE of the comparator, and by the eight control output with the input of the signal BOOST of a power supply block supplied from a battery. The controlled output +Vcc of the power supply block is connected to the exciter. The exciter as such is formed by the buffer, which is connected with the control inputs of all switching transistors in a bridge circuit. Source of the first P-channel transistor is connected with the source of the second P-channel transistor and via the first resistor, it is connected to an excitation voltage. The drain of the first P-channel transistor is connected both to the drain of the first N-channel transistor and to the first terminal of the sensor. Further, the source of the first N-channel transistor is connected to a ground terminal GND_PWR and also to the source of the second N-channel transistor. The drain of the second N-channel transistor is connected both to the drain of the second P-channel transistor and also to the second terminal of the sensor. Between the sensor's terminals, a diac is connected. In parallel to the first resistor is via the second resistor connected the base junction of the PNP transistor. The emitter of this transistor is connected to the excitation voltage +Vcc and its collector is connected via the third resistor both to the parallel combination of the fourth resistor and the first capacitor, which together with the NPN transistor emitter is grounded to a ground terminal (GND_DIG), and also to the base of the NPN transistor, the collector of which is connected both via the fifth resistor to the power supply voltage +5V_DIG and also to both inputs of the first two-input NAND gate. Between its inputs and the ground terminal GND_DIG, the second capacitor is connected. The output of the first NAND gate is connected to one input of the second two-input NAND gate, while its second input is connected to the output of the signal $\overline{\text{OVERCURRENT\_RESET}}$ of the processor and which is further connected to the buffer and to the resetting input of a SR latch. The SR latch is formed by the third and fourth two-input NAND type gate. To the output of the second two-input NAND gate is connected the setting input of this SR latch and its output OVERCURRENT is connected both to the input of the buffer and to the processor. Output of the signal (EXCT_POS) and output of the signal (EXCT_NEG) of the processor are also connected to the inputs of the buffer.

Compared to solutions covered by the preceding patents CZ 298425 and 300136, the main principle of the device remains unchanged. However, the principle of searching the resonance frequency in non-synchronized state and also the control of individual blocks behavior is changed substantially. Both these features are much more flexible, and therefore the system is capable to efficiently excite and identify vast range of various types of sensors. Initial determination of the resonance frequency is based on the spectral analysis. This solution, as opposed to the previous solution with slow-tuned generator, is significantly faster and as a result of comprehensive analysis, it always detects the basic harmonic frequency of the string. Further, in contrary to the known solutions mentioned above, it completely omits the phase-locked loop and the slow-tuning generator as well as the second comparator and all other circuits of the original control unit. These are replaced by the control processor with an analog-to-digital (A/D) converter. This solution is more simple from the circuitry point of view and universal - the system, based on measuring the responses of the both AC coupled amplifier outputs, adjusts its parameters in such a way that the excitation is optimal for a wide range of sensor types, which also leads to more accurate measuring of the resonance frequency. The differential amplifier in the new solution allows to modify its gain, the exciter newly contains current protection, and the solution also exploits new blocks, which are described including their connections in the description of the preferred embodiments.

Explanation of Drawings

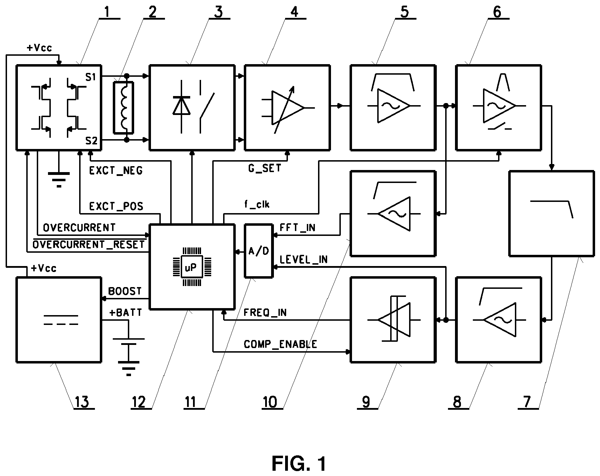

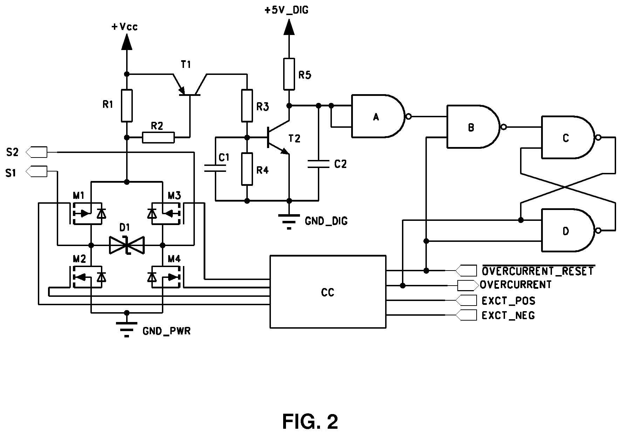

The modification of a device for the continuous measurement of oscillations of string tensometric sensors with a two-wire connection according to the presented solution will be described in closer detail in the attached drawings. Fig. 1 shows the overall block diagram of the device according to the presented solution. Specific circuit wiring of the selected part of the sensor itself is shown in Fig. 2. It shows a particular implementation of switching transistors of the exciter and the part with the current protection of switches. The control circuit of the switches is not shown in detail wiring scheme, and it is included in the diagram as the block CC.

Detailed Description of the Preferred Embodiments

The device as a whole is based, as mentioned above, on modification of systems described in CZ 298425 and CZ 300136. However, the control of the complete system is modified substantially as it is provided by the processor. The processor analyzes selected signals in the signal chain and based on this analysis results it adjusts the behavior of certain blocks, including generating pulses for the exciter-, in such a way that the sensor excitation is optimal. The modification of the exciter and the input amplifier is also related to this. It allows to modify the excitation voltage and also includes the current protection of switching transistors against a current overload. The connection of the differential amplifier is modified as well; now it allows to change the gain by the digital signals from the processor.

The device contains the exciter 1, to which is connected the sensor 2, which is connected via the block of protections 3 to the input differential amplifier 4 with variable gain. The output of the differential amplifier 4 leads via the active RC band-pass filter 5 with a fixed passband to the input of the tunable narrow-band amplifying SC filter 6, the output of which is via the low-pass filter 7 connected to the first AC coupled amplifier 8 and further to the input of the comparator 9. So far, the connection is identical with the already known systems. Newly, the input of the second AC coupled amplifier 10 is connected to the output of the active RC band-pass filter 5 with a fixed passband. The utput of the comparator 9 is now connected to the first input of the processor 12 and the output of the first AC coupled amplifier 8 is connected to the first input of the A/D converter 11.. To the second input of the A/D converter 11 is connected the output of the second AC coupled amplifier 10. The output of the A/D converter 11 is connected to the second input of the processor 12, while to its third input is connected the output of the signal OVERCURRENT of the current protection of the exciter 1. The processor 12 is further connected by the control outputs with other control blocks of the device. By its first control output, it is connected to the input of the signal

OVERCURRENT RESET of the exciter 1, by its second control output, it is connected to the input of the signal EXCT POS of the exciter 1, by its third control output, it is connected to the input of the signal EXCT NEG of the exciter 1, by its fourth control output, it is connected to the input of the block of protections 3, by the fifth control output, it is connected to the input of the signal G SET of the input of the differential amplifier 4, which is realized as a differential amplifier with variable gain, by its sixth control output, it is connected to the input of the clock signal f clk of the amplifying SC filter 6, by its seventh control output it is connected to the input of the signal COMP ENABLE of the comparator 9, and by its eighth control output, it is connected to the input of the signal BOOST of the power supply block 13 powered from the battery. The controlled output of the power supply block 13 is connected to the block of the exciter 1.

The exciter 1 contains the buffer CC, which is connected to the inputs of all switching transistors M1, M2, M3, M4 in a bridge connection. Source of the first P-channel transistor M1 is connected to the source of the second P-channel transistor M3, and via the first resistor R1 it is connected to the excitation voltage +Vcc. The drain of the first P-channel transistor M1 is connected to both the drain of the first N-channel transistor M2 and to the first terminal S1 of the sensor 2. Further, the source of the first N-channel transistor M2 is connected to the ground terminal GND PWR and also to the source of the second N-channel transistor M4. The drain of the second N-channel transistor M4 is connected to both the drain of the second P-channel transistor M3 and to the second terminal S2 of the sensor 2. Between the terminals S1 and S2, the diac D1 is connected. In parallel to the first resistor R1 is via the second resistor R2 connected the base junction of the PNP transistor T1. The emitter of the PNP transistor T1 is connected to the excitation voltage +Vcc, and its collector is connected via the third resistor R3 to both the parallel combination of the fourth resistor R4 and the first capacitor C1, which is together with the emitter of the NPN transistor T2 grounded to the ground terminal GND DIG, and to the base of the NPN transistor T2. The collector of the NPN transistor T2 is connected both via the fifth resistor R5 to the power supply voltage +5V DIG and to both inputs of the first two-input NAND gate A where between its inputs and the ground terminal GND DIG is connected the second capacitor C2. The output of the first two-input NAND gate A is connected to one input of the second two-input NAND gate B, while its second input is connected to the output of the signal

OVERCURRENT RESET of the processor 12 and it is further connected to the buffer CC and to the resetting input of the SR latch. The SR latch is formed by the third two-input NAND gate C and the fourth two-input NAND gate D. To the output of the second two-input NAND gate B is connected the setting input of this SR latch and its output OVERCURRENT is connected to both the input of the buffer CC, and to the input of the processor 12, while its output of the signal EXCT POS and its output of the signal EXCT NEG are also connected to the inputs of the buffer CC.

Behavior of the entire device is controlled by the processor 12. It generates signals EXCT NEG and EXCT NEG and uses them to control the switching of the transistors M1, M2, M3, M4 of the exciter 1 bridge. These transistors M1, M2, M3, M4 then via the terminals S1 and S2 of the exciter 1 alternately connect the coil of the sensor 2 to the excitation voltage +Vcc, which excites the string of the sensor 2. Excitation voltage +Vcc is generated in the power supply block 13 from the battery +BATT. Value of the excitation voltage +Vcc is switched by the processor 12 by means of the signal BOOST.

For excitation in the synchronized state when the resonance frequency of the sensor 2 string is known, the new solution uses the proven method with burst pulses. This method, compared to the method using a single pulse, is much more efficient and allows to sufficiently excite even sensors with low electromechanical coupling. In contrast to the original solution, however, the number of pulses as well as their amplitude is variable. These parameters along with the frequency of the pulses are set by the processor 12 based on properties of the sensor 2, or rather based on the evaluated value of the induced voltage. Mentioned parameters are selected in such a way that the excitation is optimal. It means that the string must be excited enough that the induced voltage was sufficiently high, or in other words that the signal-to-noise ratio was sufficient to allow accurate measuring of the signal frequency. On the other hand, the string must not get overexcited as it results in a considerable change of frequency. The pulses' amplitude is selected from two levels - basic and high. The basic level is given by the battery voltage, and high level is given by a DC-DC converter, which increases the battery voltage up to approximately 50V. This higher voltage is used to excite sensors with a high-impedance coil, for which direct excitation from the battery is insufficient.

During the excitation phase, the processor 12 activates the block of protections 3, which disconnects the inputs of the input differential amplifier 4 from the sensor 2 and short-circuits them. This is to ensure maximum protection of sensitive inputs even during excitation with high voltage. Unlike the original solution, the exciter 1 also provides current protection of the switching transistors M1, M2, M3, and M4. This protection is provided by a circuit for detecting the excitation current formed by the first resistor R1, voltage-current converter realized by the second resistor R2 and the PNP transistor T1, amplifier formed by the third resistor R3, the fourth resistor R4, the fifth resistor R5, the first capacitor C1, the second capacitor C2 and the NPN transistor T2, and also by digital circuits formed by four NAND gates A, B, C and D. In case that the maximum level of current flowing through the terminals S1, and S2 is exceeded, the PNP transistor T1 opens, which excites the NPN transistor T2 via the delay network formed by the third resistor R3, the fourth resistor R4, and the first capacitor C1. Output signal from the NPN transistor T2, via the first NAND gate A and the second NAND gate B, flips the SR latch formed by the third NAND gate C and the fourth NAND gate D. By its output signal OVERCURRENT via the buffer CC any further excitation of the sensor 2 is disabled and the transistors M1, M2, M3, M4 of the bridge will remain closed. This condition is indicated in the processor 12 by the signal OVERCURRENT, and the processor 12 terminates it by the signal OVERCURRENT RESET, once the cause of overcurrent is removed. This allows to re-excite the sensor 2.

After the sensor 2 is excited the voltage induced in its coil is amplified by the input differential amplifier 4 with variable gain. The signal is further amplified by the active RC bandpass filter 5 with a fixed passband, by the tunable narrow-band amplifying SC filter 6 and further it leads via the low-pass filter 7 to the first AC coupled amplifier 8 where it is also amplified and subsequently digitized by the comparator 9. Output signal FREQ IN of the comparator 9 is taken to the processor 12 where its frequency is measured, which represents the resonance frequency of the string in the synchronized state.

In this signal path, the processor 12 controls the properties of certain blocks. These include the gain of the input differential amplifier 4, which the processor 12 sets by means of the signal G SET in dependence on the magnitude of the signal FFT IN, and the passband of the tunable narrow-band amplifying SC filter 6, which is realized by the technique of switched capacitors and is tuned by means of the frequency of the clock signal f clk. This signal is generated by the processor 12 in such a way that the middle of the passband of the narrow-band amplifying SC filter 6 corresponds to the resonance frequency of the string. In the synchronized state the frequency of the signal f clk is derived from the frequency of the signal FREQ IN of the comparator 9.

The signal FFT IN is an amplified signal downstream the amplifying active RC bandpass filter 5 with a fixed passband. It is amplified by the second AC coupled amplifier 10, which removes a DC component of the signal. The signal FFT IN is digitized in the A/D converter 11 together with the signal LEVEL IN, which is the input signal of the comparator 9 amplified by the first AC coupled amplifier 8. Digitized signals are led from the A/D converter 11 to the processor 12 for processing. To increase the conversion accuracy of the A/D converter 11, the processor 12 suspends the comparator 9 activity during processing using the signal COMP ENABLE. The moment when the sensor 2 needs to be re-excited is determined by the processor 12 according the amplitude of the signal LEVEL IN, which is proportionate to the amplitude of the tail oscillations of the string.

New solution exploits spectral analysis (FFT) of the pulse response of the sensor 2 for the initial determination of the resonance frequency of the sensor in the non-synchronized state. The string of the sensor 2 is excited by a single pulse, the amplified time response is detected using the signal FFT IN, which is sampled and digitized by the A/D converter 11. The processor 12 performs spectral analysis of the obtained response, and the result gives the information about the sensor 2 string resonance frequency. Based on the ascertained frequency the processor 12 tunes the narrow-band amplifying SC filter 6 and performs excitation by burst pulses at this frequency. If according to the signal FFT IN the signal induced by the sensor 2 has sufficient amplitude, the string resonance frequency is then measured exactly at the signal FREQ IN, system parameters will be set up optimally, such as accurate fine-tuning of the SC filter, gain adjustment, amplitude and number of excitation pulses, and subsequently the system switches to the synchronized state. In this state the sensor 2 is periodically excited by burst pulses, the resonance frequency of the sensor 2 is measured, and proper setting of all system parameters is checked according to the measured magnitudes of signals FFT IN and LEVEL IN. The final accurate measurement of the string resonance frequency is performed in the processor 12 by measuring the period of the signal FREQ IN.

Described modifications were verified by functional system, and the declared optimal excitation and adjustment of the system parameters was proven for all available types of string tensometric sensors.

Industrial Applicability

Described device can be deployed anywhere where monitoring and measurements are performed by the mentioned tensometric sensors, for instance this involves various civil engineering structures such as tunnels, bridges and similar.

**Claims**

**1.** device for measuring the resonance frequency of string tensometric sensors with a two-wire connection and an automatic set-up formed by an exciter (1), to which is connected a sensor (2), which is further connected via a block of protections (3) to an input differential amplifier (4), the output of which is via an amplifying active RC band-pass filter (5) with a fixed passband connected to the input of a tunable narrow-band amplifying SC filter (6), the output of which is via a low-pass filter (7) and via a first AC coupled amplifier (8) connected to a comparator (9) **characterized by the fact that** the output of the comparator (9) is connected to the first input of a processor (12) and the output of the first AC coupled amplifier (8), connected to the input of the comparator (9), is also connected to the first input of an A/D converter (11), while to its second input is connected the output of a second AC coupled amplifier (10), the input of which is connected to the output of the active RC band-pass filter (5) with a fixed passband, and where the output of the A/D converter (11) is connected to the second input of the processor (12), while to its third input is connected the output of a signal (OVERCURRENT) of a current protection of the exciter (1), and where the processor (12) is further connected by its first control output to the input

of a signal ($\overline{\text{OVERCURRENT\_RESET}}$) of the exciter (1), by its second control output to the input of a signal (EXCT_POS) of the exciter (1), by its third control output to the input of a signal (EXCT_NEG) of the exciter (1), by its fourth control output to the block of protections (3), by its fifth control output to the input of a signal (G_SET) of the input differential amplifier (4) with variable gain, by its sixth control output to the input of a clock signal (f_clk) of the amplifying SC filter (6), by its seventh control output to the input of a signal (COMP_ENABLE) of the comparator (9), and by its eighth control output to the input of a signal (BOOST) of a power supply block (13) powered from a battery, where its controlled output of an excitation voltage (+Vcc) is connected to the block of the exciter (1), while the exciter (1) is formed by a buffer (CC), which is connected to the control inputs of all switching transistors (M1, M2, M3, M4) in bridge connection, where the source of the first P-channel transistor (M1) is connected to the source of the second P-channel transistor (M3) and via a first resistor (R1) it is connected to the excitation voltage (+Vcc), and where the drain of the first P-channel transistor (M1) is connected to both the drain of the first N-channel transistor (M2), and to a first terminal (S1) of the sensor (2), and further the source of the first N-channel transistor (M2) is connected to a ground terminal (GND_PWR) and also to the source of the second N-channel transistor (M4), while its drain is connected to both the drain of the second P-channel transistor (M3), and to a second terminal (S2) of the sensor (2), and where between the terminals (S1) and (S2) a diac (D1) is connected, while in parallel to the first resistor (R1) is via a second resistor (R2) connected the base junction of a PNP transistor (T1), where the emitter of this PNP transistor (T1) is connected to the excitation voltage (+Vcc) and its collector is connected via a third resistor (R3) to both the parallel combination of a fourth resistor (R4) and a first capacitor (C1), which is together with the emitter of the NPN transistor (T2) grounded to a ground terminal (GND_DIG), and to the base of a NPN transistor (T2), the collector of which is connected both via a fifth resistor (R5) to a power supply voltage (+5V_DIG), and to the both inputs of a first two-input NAND gate (A) where between its inputs and the ground terminal (GND_DIG) is connected a second capacitor (C2), and where the output of the first two-input NAND gate (A) is connected to a one input of a second two-input NAND gate (B), while its second input is connected to the first output of the processor (12) with the signal ($\overline{\text{OVERCURRENT\_RESET}}$), and it is further connected to the buffer (CC) and to the resetting input of a SR latch formed by a third two-input NAND gate (C) and a fourth two-input NAND gate (D), where to the output of the second two-input NAND gate (B) is connected the setting input of this SR latch and its output (OVERCURRENT) is connected to both the input of the buffer (CC), and to the third input of the processor (12), while its second output with the signal (EXCT_POS) and the third output with the signal (EXCT_NEG) are also connected to the inputs of the buffer (CC).

**Patentansprüche**

1. Einrichtung zur Messung der Resonanzfrequenz von Dehnungsmessstreifen mit Zweidrahtverbindung und automatischer Einstellung, gebildet durch Erreger (1), an dem eigener Sensor (2) angeschlossen ist, und der weiter über einen Schutzblock (3) mit einem Eingangsdifferenzverstärker (4) verbunden ist, dessen Ausgang über aktiven RC-Verstärkungsfilter (5) Typ Bandpassfilter mit fest gegebenem Durchlassband am Eingang von umstellbarem schmalbandigem SC-Verstärkungsfilter (6) angeschlossen ist, dessen Ausgang über Filter (7) Typ Tiefpass und über einen ersten abwechselnd gekoppelten Verstärker (8) am Komparator (9) angeschlossen ist, **gekennzeichnet dadurch, dass** der Ausgang des Komparators (9) mit dem ersten Eingang des Prozessors (12) und dem Ausgang des ersten abwechselnd gekoppelten Verstärkers (8), angeschlossen am Eingang dieses Komparators (9), verbunden ist, zugleich mit dem ersten Eingang des A/D-Umsetzers (11) verbunden ist, dessen zweiter Eingang mit dem Ausgang des zweiten abwechselnd gekoppelten Verstärkers (10) verbunden ist, verbunden an seinem Eingang mit dem Ausgang des aktiven RC-Verstärkungsfilters (5) Typ Bandpassfilter mit fest gegebenem Durchlassband, und wo der Ausgang des A/D-Umsetzers (11) am zweiten Eingang des Prozessors (12) angeschlossen ist, dessen dritter Ausgang mit dem Signalausgang (OVERCURRENT) Stromschutz-Erreger (1) verbunden ist, und wo der Prozessor (12) weiterhin durch ersten Steuerausgang mit dem Signaleingang (OVERCURRENT_RESET) des Erregers (1), durch zweiten Steuerausgang mit dem Signaleingang (EXCT_POS) des Erregers (1), durch dritten Steuerausgang mit dem Signaleingang (EXCT_NEG) des Erregers (1), durch vierten Steuerausgang mit dem Schutzblock (3), durch fünften Steuerausgang mit dem Signaleingang (G_SET) des Eingangsdifferenzverstärker (4) mit variablem Gewinn, durch sechsten Steuerausgang mit dem Taktsignaleingang (f_clk) des SC-Verstärkungsfilters (6), durch siebten Steuerausgang mit dem Signaleingang (COMP_ENABLE) des Komparators (9) und durch achten Steuerausgang mit dem Signaleingang (BOOST) des Quellenblocks (13), gespeist durch eine Batterie, verbunden ist, dessen geregelter Ausgang der Erregerspannung (+Vcc) am Block des Erregers (1) angeschlossen ist, wobei der Erreger (1) aus Trennschaltung (CC) gebildet wird, die mit allen Steuereingängen aller Schalttransistoren (M1, M2, M3, M4) durch Brückenschaltung verbunden ist, wo Source des ersten P-Kanal-Transistors (M1) mit Source des zweiten P-Kanal-Transistors (M3) verbunden ist und ist über ersten Widerstand (R1) an die Erregerspannung (+Vcc) angeschlossen, und wo Drain des ersten P-Kanal-Transistors (M1) zum einen mit Drain des ersten N-Kanal-Transistors (M2), zum anderen mit erster Klemme (S1) des Sensors (2) verbunden ist, und weiterhin ist Source des ersten N-Kanal-Transistors (M2) mit der Erdungsklemme (GND_PWR) und auch mit Source des zweiten N-Kanal-Transistors (M4) verbunden, dessen Drain zum einen mit Drain des zweiten P-Kanal-Transistors (M3) und zum anderen mit zweiter Klemme (S2) des Sensors (2) verbunden ist, und wo zwischen den Klemmen (S1) und (S2) ein Diac (D1) angeschlossen ist, wobei parallel am ersten Widerstand (R1) ist über zweiten Widerstand (R2) ein Basisübergang des PNP-Transistors (T1) angeschlossen, wo der Emitter dieses PNP-Transistors (T1) an Erregerspannung (+Vcc) angeschlossen ist und dessen Kollektor über dritten Widerstand (R3) an parallele Kombination des vierten Widerstands (R4) und des ersten Kondensators (C1) angeschlossen ist, die zusammen mit dem Emitter des NPN-Transistors (T2) an der Erdungsklemme (GND_DIG) geerdet ist, zum einen auf Basis von NPN-Transistor (T2), dessen Kollektor über fünften Widerstand (R5) an Versorgungsspannung (+5V_DIG) angeschlossen ist, und an beiden Eingängen vom ersten NAND-Gatter (A), wo zwischen seinen Eingängen und der Erdungsklemme (GND_DIG) ein zweiter Kondensator (C2) angeschlossen ist und wo der Ausgang des NAND-Gatters (A) an einem Eingang von zweitem NAND-Gatter (B) angeschlossen ist, dessen zweiter Eingang am ersten Ausgang des Prozessors (12) mit Signal (OVERCURRENT_RESET) angeschlossen ist, und der weiterhin an Trennschaltung (CC) und an Reset-Eingang vom RS-Fliplop-Schaltkreis angeschlossen ist, gebildet aus drittem NAND-Gatter (C) und viertem NAND-Gatter (D), wo am Eingang des zweiten NAND-Gatters (B) der Eingang dieses RS-Fliplop-Schaltkreises angeschlossen ist und dessen Ausgang (OVERCURRENT) ist sowohl am Eingang der Trennschaltung (CC) als auch am dritten Eingang des Prozessors (12) angeschlossen, dessen zweiter Ausgang mit Signal (EXCT_POS) und dritter Ausgang mit Signal (EXCT_NEG) ebenfalls an Eingängen der Trennschaltung (CC) angeschlossen sind.

**Revendications**

1. Le dispositif pour mesure de la fréquence de résonance des capteurs tensiométriques à cordes avec le montage à fil double et le règlage automatique créé par une excitatrice (1) à laquelle est connecté le capteur (2) et qui est ensuite interconnecté par un bloc (3) des protections muni d'un amplificateur différentiel d'entrée (4) la sortie duquel est connectée par un filtre RC d'amplification actif (5) de type - filtre passe-bande avec la bande passante déterminée fixe, à l'entrée du filtre SC d'amplification de bande étroite accordable (6) dont la sortie est connectée par le filtre (7) de type passe-bas et par le premier amplificateur lié alternativement (8) avec un comparateur (9), **qui se distingue par le fait que** la sortie du comparateur (9) est connectée à la première entrée du processeur (12) et la sortie du premier amplificateur alternativement lié (8) connecté à l'entrée de ce comparateur (9) est en même temps connecté à la première entrée du convertisseur A/D (11) sur la seconde entrée duquel est connecté la sortie du second amplificateur lié alternativement (10), connecté par son entrée avec la sortie du filtre RC d'amplification actif (5) de type - filtre passe-bande avec la bande passante déterminé fixe, ou la sortie du convertisseur A/D (11) est connectée à la seconde entrée du processeur (12) avec la troisième entrée duquel est connecté la sortie du signal (OVERCURRENT) de la protection de courant de l'excitatrice (1) et où le processeur (12) est ensuite connecté par la première sortie dirigeante avec l'entrée du signal (OVERCURRENT_RESET) de l'excitatrice (1), la seconde entrée dirigeante avec l'entrée du signal (EXCT_POS) de l'excitatrice (1), la troisième sortie dirigeante avec l'entrée du signal (EXCT_NEG) de l'excitatrice (1), la quatrième sortie dirigeante avec le bloc des protections (3), la cinquième sortie dirigeante avec l'entrée du signal (G_SET) de l'amplificateur différentiel d'entrée (4) avec le gain variable, la sixième sortie dirigeante avec l'entrée du signal d'une heure (f_clk) du filtre SC d'amplification (6), la septième sortie dirigeante avec l'entrée du signal (COMP_ENABLE) du comparateur (9) et la huitième sortie dirigeante avec l'entrée du signal (BOOST) du bloc de la source (13) alimenté de la batterie, la sortie dirigeante de la tension excitatrice (+Vcc) duquel est connecté dans le bloc de l'excitateur (1), quand cette excitatrice (1) est créée par un circuit de séparation (CC) qui est lié avec les entrées dirigeantes de tous les transistors de commutation (M1, M2, M3, M4) dans le montage à pont où la source du premier transistor de canal P (M1) est liée avec la source du second transistor de canal P (M3) et par le premier transistor (R1) est connectée avec la tension excitatrice (+Vcc) et le drain du premier transistor de canal P (M1) est connecté avec le drain du premier transistor de canal N (M2) tout d'abord avec la première borne (S1) du capteur (2), et ensuite la source du premier transistor de canal N (M2) est connectée avec la borne de terre (GND_PWR) et aussi avec la source du second transistor de canal N (M4) dont le drain est connecté tout d'abord avec le drain du second transistor de canal P (M3) et ensuite avec la deuxième borne (S2) du capteur (2) et où entre les bornes (S1) et (S2) est connecté un diac (D1) quand, parallèlement à la première résistance (R1) est connectée par la seconde résistance (R2) la passage de base PNP du transistor (T1) où l'émetteur de ce transistor PNP (T1) est connecté à la tension d'excitation (+Vcc) et son récepteur est connecté à travers la troisième résistance (R3) tout d'abord à la combinaison parallèle du quatrième résistance (R4) et du premier condensateur (C1) qui est avec l'émetteur NPN du transistor (T2) mise à la terre sur la borne de terre (GND_DIG), et ensuite sur la base du transistor NPN (T2) dont le récepteur est connecté aussi bien par la cinquième résistance (R5) à la tension d'alimentation (+5V_DIG), qu'aux deux entrées du premier circuit d'intersection -négation à deux entrées (A) de type NAND, où entre ses entrées et la borne de terre (GND_DIG) est connecté le second condensateur (C2) et où la sortie du premier circuit d'intersection-négation (A) de type NAND est connectée avec une entrée du second circuit d'intersection-négation à deux entrées (B) de type NAND, dont la seconde entrée est connectée avec la première sortie du processeur (12) avec le signal ($\overline{\text{OVERCURRENT RESET}}$), et qui est ensuite connectée au circuit de séparation (CC) et à l'entrée reset RS du circuit basculateur créé par le troisième circuit d'intersection-négation à deux entrées (C) de type NAND et le quatrième circuit d'intersection-négation à deux entrées (D) de type NAND où, à la sortie du second circuit d'intersection-négation à deux entrées (B) de type NAND est connecté l'entrée de réglage de ce RS du circuit basculateur et sa sortie (OVERCURRENT) est connectée soit à l'entrée du circuit de séparation (CC) qu'à la troisième entrée du processeur (12) dont la seconde sortie avec le signal (EXCT_POS) et la troisième sortie avec le signal (EXCT_NEG) sont également connectées aux entrées du circuit de séparation (CC).

FIG. 1

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 298425

- CZ 300136